# EUROPÄISCHE PATENTSCHRIFT

(11) **EP 0 963 967 B1**
(45) Veröffentlichungstag und Bekanntmachung des Hinweises auf die Patenterteilung: **11.08.2004**
(21) Anmeldenummer: 99109898.9
(22) Anmeldetag: 20.05.1999
(51) Int. Cl.: C04B 35/622, G01N 27/416, C04B 41/50

(54) **Verfahren zur Herstellung keramischer, diffusionslimitierender Schichten**
Process for the preparation of ceramic, diffusion limiting layers
Procédé de preparation de couches ceramiques limitant de la diffusion

(30) Priorität: 05.06.1998 DE 19825094
(43) Veröffentlichungstag der Anmeldung: 15.12.1999
(60) Teilanmeldung: 04009476.5
(73) Patentinhaber: J. Dittrich Elektronic GmbH & Co.KG,, 76532 Baden-Baden (DE)
(72) Erfinder: Roth, Barbara, 17491 Greifswald (DE); Brüser, Volker, 17491 Greifswald (DE); Guth, Ullrich, Dr., 17491 Gross-Schönwalde (DE)
(74) Vertreter: Haber, Jan Wilhelm

(56) Entgegenhaltungen:
- EP-A- 0 334 727
- EP-A- 0 395 925
- DE-C- 4 143 539
- US-A- 4 421 787
- US-A- 5 122 487
- US-A- 5 522 979

## Beschreibung

Die Erfindung betrifft ein Verfahren zur Herstellung keramischer, diffusionslimitierender Schichten unter Verwendung feindisperser, keramischer Pulver.

Aus DE 29 45 020 A1 ist beispielsweise eine poröse ZrO₂-Keramik bekannt, deren Porosität bzw. Gasdurchlässigkeit über den Zusatz von TiO₂ zu ZrO₂ geregelt wird. Die Porosität steigt mit steigendem TiO₂-Gehalt. Zur Feststellung der Porosität wird ein Preßling aus einer Pulvermischung aus ZrO₂ (vollstabilisiert) und TiO₂ hergestellt, der nach Sinterung bei 1470°C eine Gasdurchlässigkeit von etwa 10⁻⁵ bis 10⁻³ bar ml/ sec cm² aufweist. Es wird weiterhin in DE 29 45 020 offenbart, daß ein poröser Formkörper, z.B. als Plättchen, auf eine Elektrode eines elektrochemischen Meßfühlers aufgebracht wird und somit als poröse Schutzschicht dient. Zur Befestigung eines derartigen Plättchens auf einem Meßfühler wird eine Glasur vorgeschlagen.

Eine poröse Keramikschicht als Diffusionsbarriere oder als Diffusionskanal beschreibt weiterhin DE 42 31 966 A1. Auch hier besteht die Schicht aus ZrO₂, wobei die Porosität der Diffusionsschicht durch den Zusatz von Porenbildnern, wie beispielsweise Thermalruß, Theobromin oder Indanthrenblau, erzeugt wird, die beim Sinterprozeß verbrennen, sich zersetzen oder verdampfen. Die Zugabemenge derartiger Porenbildner ist gemäß DE 42 31 966 relativ hoch, so daß eine Porosität von 10 bis 50 % mit einem mittleren Porendurchmesser zwischen 5 und 50 µm erzeugt wird. Das ZrO₂-Pulver und die Porenbildner werden mit organischen Bindern und Lösungsmitteln so zusammengebracht, daß hieraus eine keramische Grünfolie hergestellt werden kann, die in sogenannter Tape-Technologie weiterverarbeitet wird. Als weiterer Porenbildner wird in DE 43 43 315 A1 auch Glaskohle genannt, die hier ebenfalls mit einem Keramikpulver zu einem Tape oder zu einer Paste weiterverarbeitet wird. Je nach Korndurchmesser der Glaskohle werden gemäß DE 43 43 315 nach dem Sintern des Materials Porengrößen zwischen 1 und 150 µm erreicht.

Die Nachteile dieser nach dem Stand der Technik genannten Möglichkeiten der Herstellung poröser keramischer Schichten liegen darin, daß die Poren- bzw. Porenkanaldurchmesser relativ groß sind für die Anwendung als gasdurchlässige Schichten bei Gassensoren, wodurch die Gefahr einer Verstopfung durch Partikel aus dem Verbrennungsgasstrom mit der Folge einer geringen Lebensdauer derartiger Sensoren besteht. Für rohrförmige Sensoren ist überdies die in DE 42 31 966 und DE 43 43 315 offenbarte Tape-Technologie nicht besonders geeignet, da das übliche Auflaminieren mehr für planare und nicht für sphärische Oberflächen geeignet ist.

Es ist daher Aufgabe der Erfindung die oben beschriebenen Nachteile des Standes der Technik zu überwinden und dabei ein Verfahren anzugeben, das die Herstellung einer porösen keramischen Schicht mit einer Porosität im Nanometer-Bereich (etwa 70 nm bis 600 nm) erlaubt und das weiterhin sowohl für Schichten auf planaren als auch auf sphärischen Formkörpern geeignet ist.

Die vorstehende Aufgabe wird erfindungsgemäß dadurch gelöst, daß ein oxidkeramisches Pulver verwendet wird, das eine spezifische Oberfläche nach BET (Brunauer, Emmett und Teller) im Bereich von 5 bis 50 m²/g und eine mittlere Primärteilchengröße von 20 bis 450 nm aufweist, wobei zunächst ein Teil des Pulvers in einem Temperaturbereich zwischen 800°C und 1150°C thermisch vorbehandelt und dann mit dem unbehandelten Teil des oxidkeramischen Pulvers vermischt wird, um anschließend auf eine hochtemperaturstabile Unterlage aufgetragen und bei Temperaturen im Bereich zwischen 1000°C und 1350°C eingebrannt zu werden.

Durch die thermische Vorbehandlung eines Teiles des feindispersen, oxidkeramischen Pulvers wird dessen Sinteraktivität herabgesetzt. Die Temperung des Pulvers entspricht einer Vorsinterung. Dies so eingestellte Pulvergemisch und die daraus hergestellte Siebdruckschicht gestatten einen an die hochtemperaturstabile Unterlage, vorzugsweise ein Substrat aus einem sauerstoffionenleitenden Festelektrolyten, angepaßten Sinterverlauf, der im Ergebnis zu einer homogenen, fest haftenden Schicht mit ausgebildeter nanoskaliger Porosität führt. Die Pulvermischung aus unbehandeltem, oxidkeramischen und thermisch vorbehandelten, oxidkeramischem Pulver bzw. die mit dem erfindungsgemäßen Verfahren hergestellte poröse Schicht wirkt, sofern beispielsweise vollstabilisiertes ZrO₂, das bei höheren Temperaturen durchaus eine nennenswerte Sauerstoffionenleitfähigkeit zeigt, verwendet wird, als eine gaslimitierende Diffusionsschicht, beispielsweise auf einer Pumpelektrode eines polarographischen Sauerstoffsensors und gegebenenfalls auch als Festelektrolyt.

Vorteilhafte Ausgestaltungen und Weiterbildungen des erfindungsgemäßen Verfahrens sind in den Unteransprüchen aufgeführt, wonach für das feindisperse Pulver ein teil- oder vollstabilisiertes ZrO₂-Pulver oder ein Al₂O₃ - Pulver oder daraus hergestellte Mischungen, die bei höherer Temperatur Sauerstoffionenleitfähigkeit zeigen, eingesetzt werden. Die Vollstabilisierung des ZrO₂-Pulvers kann beispielsweise durch die Zugabe von 8 Mol % Y₂O₃ erfolgen.

Wird das feindisperse, oxidkeramische Pulver vermischt mit dem thermisch vorbehandelten Pulver, so liegen die Anteile des unbehandelten Pulvers gegenüber dem thermisch behandelten zwischen 10 Gew % bis 50 Gew %.

Vorteilhafterweise wird die Pulvermischung mit Hilfe an Anpastmitteln, z.B. eine Ethylzellulose-Lösung, zu einer Paste verarbeitet, die im Siebdruckverfahren auf eine Unterlage aufgetragen wird. Als Unterlage kann ein planares oder sphärisches Substrat, beispielsweise aus vollstabilisiertem ZrO₂ verwendet werden. Diese Unterlage kann auf beiden Seiten mit einer funktionellen Schicht in Form kongruent liegender Elektroden beschichtet sein. Dabei kann weiterhin eine der Elektroden vollständig von einer erfindungsgemäßen diffusionslimitierenden Schicht abgedeckt sein.
Im Falle der keramischen Schicht mit der Eigenschaft diffusionslimitierend und sauerstoffionenleitend wird auf einer keramischen Unterlage (planar oder sphärisch) einseitig eine Elektrodenschicht aufgebracht. Auf dieser Elektrode folgt die diffusionslimitierende und sauerstoffionenleitende Schicht, die wiederum von einer zweiten Elektrodenschicht bedeckt ist.

Durch die Sinterung der aufgetragenen Schicht im Temperaturbereich zwischen 1000°C und 1350°C, entsteht eine poröse keramische Schicht mit einer Schichtdicke im Bereich etwa zwischen 15 und 100 µm. Um Aufschluß über die Porosität der Schicht bzw. ihre Wirksamkeit in Bezug auf ihre diffusionslimitierende Eigenschaft zu erlangen, kann beispielsweise eine rasterelektronenmikroskopische Aufnahme und/oder ein sogenannter Helium-Leckratentest herangezogen werden. Bei dem Leckratetest wird eine definiertes Flächensegment der porösen Schicht auf einem gasdichten Trägermaterial einer Heliumatmosphäre ausgesetzt und der Druckverlust, der sich aus dem durch die Schicht hindurchdiffundierenden Helium ergibt, gemessen. Die Durchlässigkeit gegenüber Helium ist im Vergleich zu der gegenüber Sauerstoff aufgrund der unterschiedlichen Molekülgröße wesentlich höher, so daß sich mit dem geschilderten Leckratetest für die Praxis nur eine Richtgröße in Bezug auf die diffusionslimitierende Eigenschaft der Schicht in Bezug auf Sauerstoff ergibt. Zusammen mit einer rasterelektronenmikroskopischen Aufnahme kann aber durchaus eine Aussage über die Qualität der nach dem erfindungsgemäßen Verfahren hergestellten Schicht gemacht werden.

Die nach oben genannten Verfahren hergestellten Schichten können beispielsweise als Diffusionsschicht und/oder als sauerstoffionenleitende Schicht bei Sauerstoffsonden zur Bestimmung von Sauerstoff in Gasen verwendet werden.

Im folgenden wird die Erfindung anhand von Ausführungsbeispielen erläutert.

### Beispiel 1:

Als oxidkeramisches Pulver wird ein mit 8 mol % Y₂O₃ vollstabilisiertes ZrO₂ - Pulver (8YSZ-Pulver) eingesetzt. Es weist eine spezifische Oberfläche nach BET von 13,2 m² /g auf. Die mittlere Primärteilchengröße der im wesentlichen sphärischen Pulverpartikel beträgt 240 nm. Eine Hälfte des Pulvers wird bei 1150°C 10 Stunden thermisch vorbehandelt, um anschließend mit der unbehandelten Hälfte des Pulvers vermischt zu werden. Diese Pulvermischung bildet den Feststoffanteil einer Paste, die unter Hinzufügen von einem Siebdruckmedium, beispielweise Ethylzellulose in Terpineol gelöst, hergestellt wird. Die Paste wird im Siebdruckverfahren auf ein Substrat mit gesinterten Elektroden oder anderen funktionellen Schichten aufgetragen, getrocknet und bei einer Maximaltemperatur von 1300°C für 2 Stunden eingebrannt.

### Beispiel 2:

30 Teile eines 8YSZ-Pulver (siehe Beispiel 1) mit einer BET Oberfläche von 30 m² /g und einer mittleren Primärteilchengröße von 90 nm werden bei 800°C 5 Stunden vorbehandelt und dann mit 70 Teilen des vorgenannten, unbehandelten 8YSZ-Pulvers vermischt. Aus dieser Mischung wird nach den Angaben gemäß Beispiel 1 eine Paste hergestellt, die im Siebdruckverfahren auf ein Substrat bzw. auf eine funktionelle Schicht, wie beispielsweise eine Elektrode, aufgetragen wird. Der Einbrand erfolgt hier für 2 Stunden bei 1150°C.

Die gemäß Beispiel 1 und 2 erzeugten Schichten stellen doppelfunktionale Schichten dar, indem sie einerseits die Funktion einer diffusionslimitierenden Abdeckschicht und andererseits die eines Sauerstoffionenleiters übernehmen können.

## Patentansprüche

1. Verfahren zur Herstellung keramischer, diffusionslimitierender Schichten unter Verwendung feindisperser, keramischer Pulver, **dadurch gekennzeichnet, daß** ein oxidkeramisches Pulver verwendet wird, das eine spezifische Oberfläche nach Brunauer-Emmett-Teller (BET) im Bereich von 5 bis 50 m²/g und eine mittlere Primärteilchengröße von 20 bis 450 nm aufweist, wobei zunächst ein Teil des Pulvers in einem Temperaturbereich zwischen 800°C und 1150°C thermisch vorbehandelt und dann mit dem unbehandelten Teil des oxidkeramischen Pulvers vermischt wird, um anschließend auf eine hochtemperaturstabile Unterlage aufgetragen und bei Temperaturen im Bereich zwischen 1000°C und 1350°C eingebrannt zu werden.

2. Verfahren zur Herstellung keramischer, diffusionslimitierender Schichten nach Anspruch 1, **dadurch gekennzeichnet, daß** das oxidkeramische Pulver ein teil- oder vollstabilisiertes ZrO₂- Pulver, ein Al₂O₃ - Pulver oder eine Mischung aus einem teil- oder vollstabilisiertem ZrO₂ -Pulver und einem Al₂O₃ -Pulver ist.

3. Verfahren zur Herstellung keramischer, diffusionslimitierender Schichten nach Anspruch 1 oder 2, **dadurch gekennzeichnet, daß** das unbehandelte, oxidkeramische Pulver mit einem Anteil von 10 Gew % bis 50 Gew % dem thermisch vorbehandelten, oxidkeramischen Pulver zugemischt wird.

4. Verfahren zur Herstellung keramischer, diffusionslimitierender Schichten nach Anspruch 1 **dadurch gekennzeichnet, daß** die Pulvermischung aus unbehandeltern, oxidkeramischen Pulver und thermisch behandelten, oxidkeramischen Pulver mit Hilfe von Anpastmitteln zu einer Paste verarbeitet wird, die im Siebdruckverfahren auf eine Unterlage aufgetragen wird.

5. Verfahren zur Herstellung keramischer, diffusionslimitierender Schichten nach Anspruch 1 oder 4, **dadurch gekennzeichnet, daß** die Unterlage, auf die die Pulvermischung aus unbehandeltem, oxidkeramischen Pulver und thermisch behandelten, oxidkeramischen Pulver oder die die Pulvermischung enthaltende Paste aufgetragen wird, ein hochtemperaturstabiles Substrat oder eine funktionelle Schicht auf einem hochtemperaturstabilen Substrat ist.

6. Verfahren zur Herstellung keramischer, diffusionslimitierender Schichten nach Anspruch 5, **dadurch gekennzeichnet, daß** das hochtemperaturstabile Substrat ein Festelektrolyt mit Sauerstoffionenleitfähigkeit ist.

7. Verwendung einer keramischen, diffusionslimitierenden Schicht, hergestellt nach einem Verfahren gemäß den vorhergehenden Ansprüchen als Diffusionsschicht und/oder sauerstoffionenleitende Schicht bei einer Sauerstoffsonde zur Bestimmung von Sauerstoff in Gasen.

## Claims

1. Process for the preparation of ceramic, diffusion limiting layers using finely dispersed ceramic powder **characterised in that** an oxide ceramic powder is used which has a specific surface area according to Brunauer-Emmett-Teller (BET) in the region of 5 to 50 m²/g and an average primary particle size of 20 to 450 nm, part of the powder being first pretreated thermally within a temperature range of between 800 °C and 1150 °C and then mixed with the untreated part of the oxide ceramic powder in order to be subsequently applied to a high temperature stable substrate and stoved at temperatures in the region between 1000°C and 1350°C.

2. Process for the preparation of ceramic, diffusion limiting layers according to claim 1 **characterised in that** the oxide ceramic powder is a partly or fully stabilized ZrO₂ powder, an Al₂O₃ powder or a mixture of a partly or fully stabilised ZrO₂ powder and an Al₂O₃ powder.

3. Process for the preparation of ceramic, diffusion limiting layers according to claim 1 or claim 2 **characterised in that** the untreated oxide ceramic powder is admixed in a proportion of 10 % by wt. to 50 % by wt. to the thermally pretreated oxide ceramic powder.

4. Process for the preparation of ceramic, diffusion limiting layers according to claim 1 **characterised in that** the powder mixture of untreated oxide ceramic powder and thermally treated oxide ceramic powder is processed by means of a paste making agent into a paste which is applied to a substrate by the screen printing process.

5. Process for the preparation of ceramic, diffusion limiting layers according to claim 1 or 4 **characterised in that** the substrate onto which the powder mixture of untreated, oxide ceramic powder and thermally treated oxide ceramic powder or the paste containing the powder mixture is applied is a high temperature stable substrate or a functional layer on a high temperature stable substrate.

6. Process for the preparation of ceramic, diffusion limiting layers according to claim 5 **characterised in that** the high temperature stable substrate is a solid electrolyte with oxygen ion conductivity.

7. Use of a ceramic diffusion limiting layer prepared according to a process according to one of the preceding claims as diffusion layer and/or oxygen ion conductive layer in an oxygen probe for the determination of oxygen in gases.

## Revendications

1. Procédé de préparation de couches céramiques limitant la diffusion, avec mise en oeuvre de poudre céramique finement dispersée, **caractérisé en ce qu'**on utilise une poudre de céramique oxydée présentant une surface spécifique selon Brunauer-Emmet-Teller (BET) de l'ordre de 5 à 50 m²/g, et une granulométrie primaire moyenne de 20 à 450 nm, et dans lequel on commence par soumettre à un traitement thermique préalable une partie de la poudre dans une plage de température comprise entre 800 °C et 1150 °C, puis on la mélange avec la partie non traitée de la poudre de céramique oxydée, pour ensuite l'appliquer sur un support stable aux hautes températures et la cuire à des températures comprises entre 1000 °C et 1350 °C.

2. Procédé de préparation de couches céramiques limitant la diffusion selon la revendication 1, **caractérisé en ce que** la poudre de céramique oxydée est une poudre de ZrO₂ partiellement ou entièrement stabilisée, une poudre d'Al₂O₃, ou un mélange d' une poudre de ZrO₂ partiellement ou entièrement stabilisée et d'une poudre d'Al₂O₃.

3. Procédé de préparation de couches céramiques limitant la diffusion selon la revendication 1 ou 2, **caractérisé en ce que** la poudre de céramique oxydée non traitée est mélangée en une proportion de 10 % en poids à 50 % en poids, à la poudre de céramique oxydée soumise à un traitement thermique préalable.

4. Procédé de préparation de couches céramiques limitant la diffusion selon la revendication 1, **caractérisé en ce que** le mélange de poudre constitué de poudre de céramique oxydée non traitée et de poudre de céramique oxydée traitée thermiquement est transformé à l'aide d'agents formateurs de pâte en une pâte qui est appliquée sur un support dans le procédé de sérigraphie.

5. Procédé de préparation de couches céramiques limitant la diffusion selon la revendication 1 ou 4, **caractérisé en ce que** le support sur lequel est appliquée la pâte contenant le mélange de poudre constitué de poudre de céramique oxydée non traitée et de poudre de céramique oxydée traitée thermiquement ou le mélange de poudre est un substrat stable aux hautes températures ou une couche fonctionnelle sur un substrat stable aux hautes températures.

6. Procédé de préparation de couches céramiques limitant la diffusion selon la revendication 5, **caractérisé en ce que** le substrat stable aux hautes températures est un électrolyte solide à capacité de conduction d'ions d'oxygène.

7. Mise en oeuvre d'une couche céramique limitant la diffusion, préparée suivant un procédé en accord avec les revendications précédentes, comme couche de diffusion et/ou couche conductrices d'ions d'oxygène, avec une sonde à oxygène, pour doser l'oxygène dans des gaz.
